# EUROPEAN PATENT APPLICATION

(11) **EP 4 563 293 A1**
(43) Date of publication of application: **04.06.2025**
(21) Application number: 23212705.0
(22) Date of filing: 28.11.2023
(51) Int. Cl.: B25J 9/00, B25J 9/16, B25J 15/02, G05B 19/00

(54) **SYSTEM AND METHOD FOR GROUPING AND HANDLING FLEXIBLE ARTICLES**

(71) Applicant: OPTIMA nonwovens GmbH, 74523 Schwäbisch Hall (DE)
(72) Inventor: Pfeifer, Georg, 74523 Schwäbisch Hall (DE)
(74) Representative: Patentanwälte Ruff, Wilhelm, Beier, Dauster & Partner mbB

(57) **Abstract**

The present invention relates to a system and a method for grouping and handling flexible articles serially conveyed along a conveyor path (20), wherein a magazine (10) is arranged in an inlet position at an extension of the conveyor path (20), the magazine (10) having two opposing side walls (104) that define a space therebetween, wherein the magazine is configured to receive a number of flexible articles (2) in the space between the side walls (104), wherein an industrial robot (12) to which the magazine (10) is attached or which grips the magazine (10) arranges the magazine (10) in the inlet position, moves the magazine (10) arranged in the inlet position such that the number of flexible articles (2) is sequentially received in the magazine (10), and transfers the magazine (10) with the number of flexible articles to an outlet position. The invention further relates to a use of an industrial robot for grouping and handling flexible articles serially conveyed along a conveyor path (20), wherein a magazine is attached to or gripped by the industrial robot.

## Description

### TECHNICAL FIELD AND PRIOR ART

The present invention relates to a system and a method for grouping and handling flexible articles, in particular absorbent hygiene products, such as diapers, training pants, sanitary napkins, panty liners, etc., wherein the grouped flexible articles can be inserted into a packaging, such as a bag or a box.

The flexible articles are grouped to a formation of one stack or several stacks. In the context of the invention, a stack is defined as a number of articles the flat sides of which are arranged in parallel.

For grouping flexible articles to a stack, the use of so-called stackers is known. A stacker, as shown for example in US 2007/0065270 A1, has a plurality of compartments for receiving the articles, wherein the compartments are moved along a closed loop path. Articles serially transported along a supply path are supplied to the stacker and inserted into the successive compartments at an inlet position of the stacker. Downstream of the inlet position, one or several outlet positions are provided at which a number of articles forming a stack are removed from the stacker.

When packaging the flexible articles, several process steps are usually required to create a desired formation of one or several stacks and to place the formation in a desired orientation into a packaging, such as a bag or a box.

For example, for a supply of articles to the stacker, typically articles coming from a production line lying flat on a transfer conveyor have to be rotated by 90° using a so-called twist conveyor. In the stacker, the articles are horizontally rotated by 180°, i.e. articles supplied in a "nose leading" orientation are removed in a "nose trailing" orientation and vice-versa. In some applications this rotation desired, in others not. In case the horizontal rotation is not desired, after removing the stack from the stacker, the stack has to be rotated by 180° horizontally, or the articles have to be rotated previous to supplying the articles to the stacker. Further, in some applications, a "nose up" or "nose down" orientation is required for a packaging of the stack, which requires a 90° rotation using for example a pusher. In case in an application two stacks are to be formed on top of each other as a formation, it is known to provide a so-called "lifting table", wherein a first stack is pushed onto the table, the table is lowered, and then a second stack is pushed onto the first stack. The formation is then lifted and conveyed further towards a packaging arrangement via a pusher. Depending on a size and form of a packaging unit, further or alternative handling steps are necessary, wherein each handling step potentially causes losses or irregularities in the process. Further, typically each handling step requires a dedicated hardware, such as a single-axis or multi-axis manipulation system.

### SUMMARY OF THE INVENTION

It is the object of the invention to provide a system and a method for grouping and handling flexible articles for a supply of the grouped flexible articles to a packaging arrangement, wherein a number of handling steps can be reduced.

This object is solved by a system, a method, and a use of an industrial robot with the features of claims 1, 9, and 15. Preferred embodiments are defined in the dependent claims.

According to a first aspect, a system for grouping and handling flexible articles is provided, wherein the flexible articles are serially conveyed along a conveyor path to the system. The system comprises a magazine and an industrial robot, wherein the magazine having two opposing side walls that define a space therebetween is configured to receive a number of flexible articles in the space between the side walls, and is attached to or gripped by the industrial robot, and wherein the industrial robot is adapted for arranging the magazine in an inlet position at an extension of the conveyor path, for moving the magazine arranged in the inlet position such that the number of flexible articles are sequentially received in the magazine, and for transferring the magazine with the number of flexible articles to an outlet position.

According to a second aspect, a method for grouping and handling flexible articles serially conveyed along a conveyor path is provided, wherein a magazine is arranged in an inlet position at an extension of the conveyor path, the magazine having two opposing side walls that define a space therebetween and being configured to receive a number of flexible articles in the space, wherein an industrial robot to which the magazine is attached or which grips the magazine arranges the magazine in the inlet position, moves the magazine arranged in the inlet position such that the number of flexible articles is sequentially received in the magazine, and transfers the magazine with the number of flexible articles to an outlet position.

According to a third aspect, a use of an industrial robot for grouping and handling flexible articles serially conveyed along a conveyor path is provided, wherein a magazine is attached to or gripped by the industrial robot, the magazine having two opposing side walls that define a space therebetween, wherein the magazine is configured to receive a number of flexible articles in the space between the side walls, wherein the industrial robot arranges the magazine in an inlet position at an extension of the conveyor path, moves the magazine arranged in the inlet position such that the number of flexible articles is sequentially received in the magazine, and transfers the magazine with the number of flexible articles to an outlet position.

In the context of the application, an industrial robot is a kinematic system capable of movement on three or more axes. In embodiments, the industrial robot is a robotic arm having three to six axes. However, the invention is not limited to the use of a robotic arm as an industrial robot.

Depending on the application, the magazine is attached to the industrial robot, wherein an attachment for example is carried-out during a set-up, or the magazine is temporarily gripped by the industrial robot, wherein in the context of the application, the expression "gripped" defines a temporary attachment using for example a mechanical gripper having jaws and/or magnetic forces.

Throughout this description and the claims, the indefinite article "a" or "an" means "one or more". In particular, the system in embodiments comprises two or more industrial robots and/or two or more magazines. Likewise, the magazine in embodiments is arranged as required by the specific grouping and/or handling task in two or more different inlet and/or outlet positions. Reference to "a first element" does not mandate presence of "a second element". Further, the expressions "first" and "second" are only used to distinguish one element from another element and not to indicate any order of the elements.

The industrial robot allows placing the magazine at an inlet position in a desired orientation for receiving the number flexible articles conveyed continuously or intermittently towards the magazine. The inlet position of the system can be chosen to coincide with an outlet of a production line producing the flexible articles, wherein the magazine can be oriented such that the flexible articles can be received in the magazine with the orientation, in which the flexible articles are leaving the production line. In other words, a twist-conveyor typically required between an outlet of a production line and an inlet of known stackers can be omitted. The magazine with the number of flexible articles can then be transferred using the industrial robot to an outlet position, wherein again at the outlet position the magazine can be arranged with any desired orientation for supplying the number of flexible articles from the magazine to a subsequent system. An orientation at an outlet position and/or a specific outlet position of a number of outlet positions can be modified during a run-time of the system. In embodiments, the outlet position is chosen such that the flexible articles are directly supplied to a packaging, such as a bag or a box. Hence, the use of the industrial robot allows taking-over flexible articles from a production line and supplying the flexible products to a packaging while minimizing the handling steps.

The system in embodiments comprises a control unit for controlling an operation of the industrial robot, wherein parameters of the system, such as an inlet position, an orientation of the magazine at the inlet position, a number of flexible articles to be received in the magazine, a movement of the magazine for receiving the flexible products and others can be adjusted by an operator via the control unit.

The magazine in embodiments is U-shaped, comprising the two side walls and a bottom wall extending between the side walls, wherein the magazine preferably is filled from a side opposite the bottom wall, such that the bottom wall defines a limit position for the flexible articles. A removal of the flexible articles in embodiments is possible towards either of the three open sides. In other embodiments, the magazine is box-shaped and has only one or two open sides.

In an embodiment, side walls of the magazine are moveable towards each other for compressing the flexible articles received in the space therebetween. For receiving the flexible articles, the side walls can be moved apart for avoiding tight tolerances in supplying the flexible articles to the magazine. After the flexible articles are received between the side walls, the side walls can be approached for compressing the flexible articles, in particular prior to placing the flexible articles in a packaging. In embodiments, a force element, more particular, a spring element, is provided for forcing the side walls towards each other and/or apart from each other.

In an embodiment, the space of the magazine is subdivided into a plurality of compartments, wherein in particular each compartment is adapted for receiving at least one flexible article. It will be understood by the person skilled in the art, that depending on the specific application and the requirements of a packaging, the number of flexible articles received in the magazine may be constant or variable, wherein some or all of the plurality of compartments are filled with a flexible article. In an embodiment, the compartments can be fanned out or expanded for receiving the flexible articles, wherein for example an angle between two panels limiting one compartment when fanned out varies between 0° to 30°. For securely retaining the articles in the compartments, the compartment can be closed, wherein for example an angle between two panels limiting one compartment when closed varies between 0° to -15°.

In an embodiment, the industrial robot is adapted for rotating the magazine arranged at the inlet position about an axis parallel to leading edges of the flexible articles conveyed along the conveyor path, such that the number of flexible articles are sequentially received in the magazine. In particular, in case the magazine has a plurality of compartments, the magazine is rotated such that the compartments are sequentially placed at an extension of the conveyor path for sequentially supplying the flexible articles conveyed along the conveyor path to the individual compartments. In embodiments, each compartment is expanded or fanned out when positioned for receiving a flexible article and closed after reception of a flexible article. In embodiments, the industrial robot is adapted for rotating the magazine about a horizontal axis, such that the number of flexible articles conveyed on their flat sides along a horizontal plane are sequentially received in the magazine.

In alternative or in addition, in embodiments the industrial robot is adapted for shifting the magazine arranged at the inlet position in a direction transverse to the conveyor path, such that the number of flexible articles conveyed along the conveyor path are sequentially received in the magazine. In particular, in embodiments, the flexible articles are conveyed on their flat sides along a horizontal plane, wherein the magazine is shifted in a vertical direction such that a number of flexible articles are sequentially received in the magazine.

In embodiments, the magazine is adapted for receiving exactly one stack in the space between the side walls, wherein the flexible articles of the one stack are arranged in the stack with their flat sides in parallel to the two opposing side walls. In embodiments, an orientation of a leading edge of all flexible articles of the stack is the same, i.e. all flexible articles in one stack are arranged either "nose leading" or "nose trailing" in the magazine. In other embodiments, an orientation of the magazine is twisted by 180° upon receiving the number of flexible articles such that an orientation of the flexible articles of the stack varies, i.e. some flexible articles in one stack are either arranged "nose leading" and some are arranged "nose trailing" in the magazine.

In other embodiments, the magazine is adapted for receiving two or more adjacent stacks, wherein in each case the flat sides of flexible articles in one stack are arranged in parallel.

In an embodiment, two or more magazines are provided, which in turns are arrangeable in the inlet position by means of the manipulator such that in each magazine a number of flexible articles are sequentially received. The number of flexible articles received in each magazine may vary.

It will be understood by the person skilled in the art, in case the system comprises two or more magazines, depending on the specific requirement, all magazines are identical in design or some or all of the magazines differ in design. Further, in embodiments, each magazine is handled by one dedicated industrial robot. In other embodiments, two industrial robots are used for a movement of the magazines at the inlet position and for a transfer of the magazines from the inlet position to an outlet position.

In embodiments, the system further comprises a feeder device arranged at the inlet position, which feeder device is adapted for feeding the flexible articles from the conveyor path into the magazine. The feeder device allows a safe supply of flexible articles having a low stability to the magazine even in case the magazine has no compartments. The feeder device in embodiments comprises a closed-loop conveyor having receptacles, each of which accommodates an individual flexible article between a pair of side walls, wherein the side walls are fanned or spread apart for receiving a flexible article and moved close together to clamp the flexible article and carry the flexible article into the magazine. Such a feeder device is shown for example in US 7475771 incorporated herewith by reference. However, the invention is not limited to the use of a feeder device as shown in US 7475771.

Further features, details, and benefits of the invention will be evident from following description of exemplary embodiments of the invention, the claims and the abstract, whose respective wordings are herewith made integral parts of this description by way of reference thereto, and the drawings.

### BRIEF DESCRIPTION OF THE DRAWINGS

In the following, embodiments of the invention will be described in detail based on several schematic drawings in which
- Fig. 1:: shows in a side view a first embodiment of a system for grouping and handling flexible articles comprising an industrial robot and a magazine attached to the industrial robot, wherein the system is shown in a first state, in which the magazine is arranged in an inlet position at an extension of a conveyor path and moved such that a number of flexible articles are sequentially received in the magazine;
- Fig. 2:: shows in a top view the first embodiment of the system of Fig. 1 in a second state, in which the magazine is transferred to a packaging arrangement;
- Fig. 3:: shows in the top view the first embodiment of the system of Fig. 1 in a third state, in which the stack is supplied to the packaging arrangement;
- Fig. 4:: shows a second embodiment of a system for grouping and handling flexible articles comprising two industrial robots, wherein to each industrial robot a magazine is attached;
- Fig. 5:: shows a third embodiment of a system for grouping and handling flexible articles comprising two industrial robots, wherein to each industrial robot a magazine is attached;
- Fig. 6:: shows a fourth embodiment of a system for grouping and handling flexible articles comprising two magazines, wherein each magazine is adapted to accommodate two stacks of articles, in a first state; and
- Fig. 7:: shows the fourth embodiment of the system of Fig. 6 in a second state.

### DETAILED DESCRIPTION OF EMBODIMENTS OF THE INVENTION

Throughout the drawings, the same or similar elements will be denoted by the same reference numerals. The drawings are schematic and not to scale. The relative dimensions and ratios in the drawings are exaggerated or reduced for clarity and convenience. Of course, it is understood that these particular dimensions are merely illustrative and are in no way limiting.

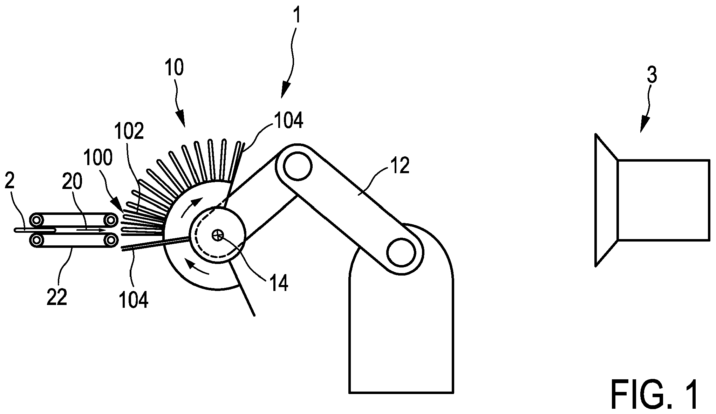

Fig. 1 to 3 show a first embodiment of a system 1 for grouping and handling flexible articles 2, wherein the flexible articles 2 are grouped to a stack and the stack of flexible articles is supplied to a packaging arrangement 3.

As schematically shown in Fig. 1 to 3, the system 1 comprises a magazine 10 and an industrial robot 12, wherein the magazine 10 is attached to the industrial robot 12.

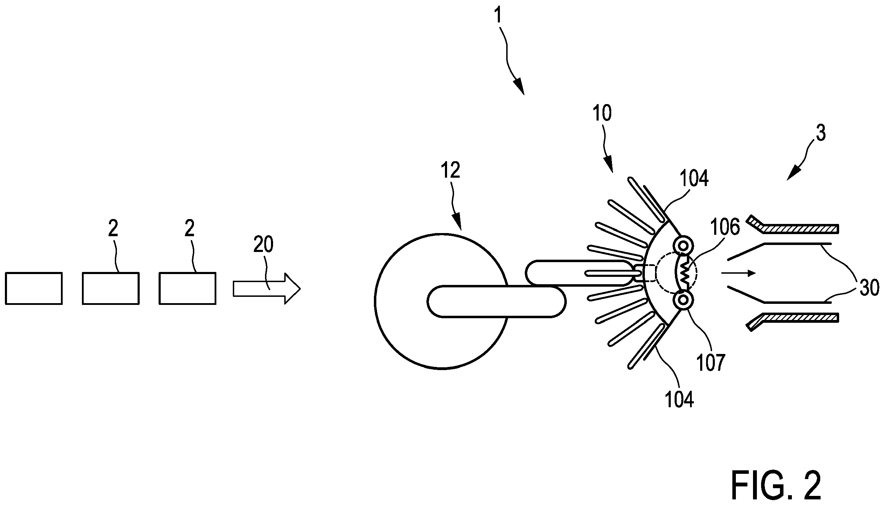

As schematically shown in Fig. 1 and 2, the flexible articles 2 are conveyed towards the system 1 along a conveyor path 20 schematically indicated by an arrow. In the embodiment shown in Fig. 1 to 3, the articles 2 are conveyed along a horizontal plane towards the system 1 using a belt conveyor 22 having two belts arranged at opposite flat sides of the article 2. However, the design of the conveyor system is only by way of example.

The magazine 10 has two opposing side walls 104 defining a space therebetween.

As shown in Fig. 1, the industrial robot 12 is adapted for arranging the magazine 10 in an inlet position in an extension of the conveyor path 20, and for moving the magazine 10 arranged in the inlet position such that a number of flexible articles 2 are sequentially received in the space of the magazine 10 and grouped to a stack.

In the embodiment shown in Figs. 1 to 3, the magazine 10 comprises several compartments 100, which are separated by panels 102, wherein only some of the panels102 are shown. The industrial robot 12 is adapted for arranging the magazine 10 in the extension of the conveyor path 20 and for rotating the magazine 10 about a horizontal axis 14, which is transverse to the conveyor path 20, such that the compartments 100 are sequentially arranged in the extension of the conveyor path 20 and successive articles 2 are received in successive compartments 100.

As shown in Fig. 1, in the embodiment shown, at an inlet position, the magazine 10 is oriented such that the two panels 102 between which a flexible article 2 is received are arranged above and below the conveyor path 20 conveying the articles along the horizontal plane.

The magazine 10 shown in Fig. 1 to 3 allows for a fanning out or spreading of the compartments 100, wherein an angle between two panels 102 limiting one compartment 100 is expanded to a suitable angle, for example a spreading angle that varies between about 0° and about 30°, to extend a time window for feeding the flexible articles 2 into the individual compartments 100.

As indicated in Fig. 1, the magazine 10 is rotated about the horizontal axis 14. In the embodiment shown, the axis about which the magazine is rotated, is a rotation axis of a last link of the industrial robot 12 in the form of a robotic arm, wherein the industrial robot 12 is arranged in the inlet position shown in Fig. 1 such that the rotation axis of the last link is in a horizonal plane at the extension of the conveyor path 20 and perpendicular to the conveyor path 20. The industrial robot 12 in embodiments is designed to allow a rotation of the magazine about the rotation axis of the last link at high speeds, for example to allow feeding speeds of the flexible articles of 1000 ppm (products per minute).

After a defined number of articles 2 is received in the magazine 10, the filled magazine 10 can be transferred to an outlet position, for example an outlet position at the packaging arrangement 3, using the industrial robot 12 as shown in Fig. 2. As shown in Fig. 2, in the embodiment shown, at the outlet position, the magazine 10 is oriented such that the panels 102 and the side walls 104 extend perpendicular to the horizontal plane, i.e. the flexible articles 2 received in the magazine 10 are rotated by 90° between the inlet position shown in Fig. 1 and the outlet position shown in Fig. 2.

In the exemplary embodiment, the magazine 10 further comprises a force element in the form of a spring element 106, which forces the side walls 104 apart.

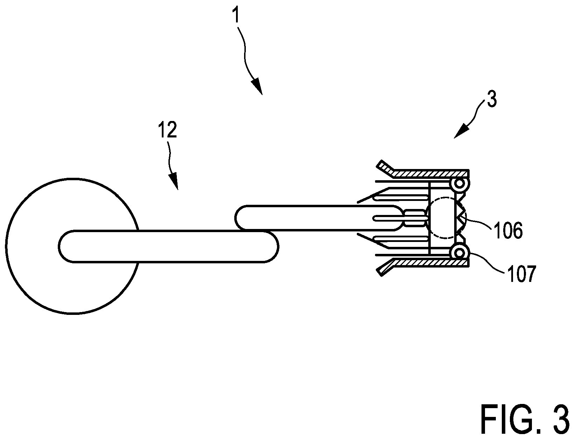

As shown in Fig. 3, the spring element 106 is arranged between two rollers 107, which are moved towards each other against the restoration force of the spring element 106 for compressing the flexible articles 2 received in the space between the two side walls 104 when supplying the flexible articles 2 to a packaging arrangement 3. In the exemplary embodiment, the rollers 107 interact with guiding rails 30 of the packaging arrangement 3 for compressing the flexible articles 2 upon placing the flexible articles 2 in a packaging (not shown). When compressing the flexible articles 2, an angle between two panels 102 of the compartments is reduced to for example 0° or even to a negative angle, for example an angle between below 0° and -15°. Preferably, an angle between the panels 102 of the compartments 100 is reduced before or during transferring the magazine 10 from the inlet position shown in Fig. 1 to the outlet position shown in Fig. 2 to securely retain the flexible articles 2 within the compartments 100.

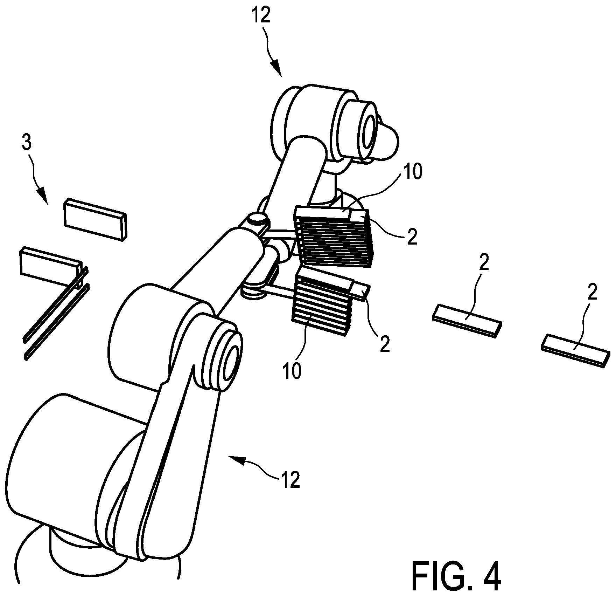

Fig. 4 shows a second embodiment of a system 1 for grouping and handling flexible articles 2, which system comprises two (or more) industrial robots 12, wherein to each industrial robot 12 a magazine 10 is attached.

As schematically shown in Fig. 4, after one magazine 10 is filled, this magazine 10 is transferred to an outlet position, in particular for a supply to a packaging arrangement 3.

During the transfer of the filled magazine 10, another, depending on the application the second or nth, industrial robot 12 is controlled to arrange a further magazine 10 in the inlet position to receive the flexible articles 2 suppled in a continuous flow from a production line (not shown). Once this magazine 10 is filled, the magazine 10 is transferred to the same or a different outlet position for further processing.

As will be understood by the person skilled in the art, when using two or more magazines 10 any desired sequence or pattern for filling the two or more magazines 10 can be chosen. For example, the number and/or arrangement of flexible articles 2 can be varied for different magazines 10 and/or an outlet position and/or an orientation of the magazines 10 at the outlet positions can be altered as required by the packaging arrangements 3 or any alternative processing devices at the outlet positions.

In the embodiment shown in Fig. 4, the magazines 10 arranged at the inlet position are moved in a vertical direction.

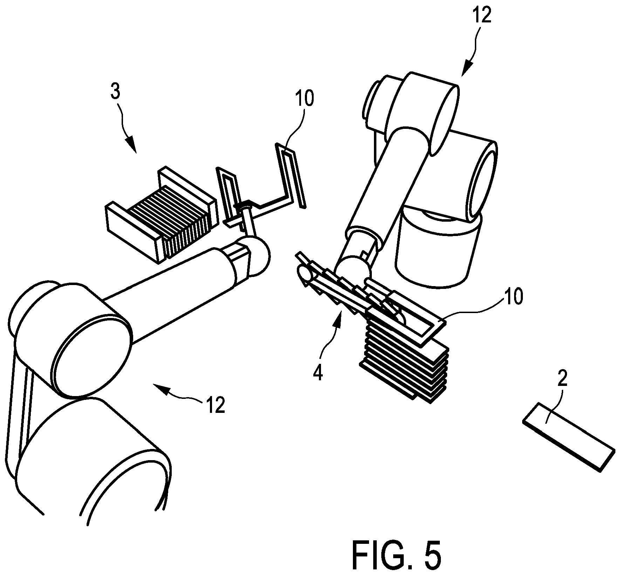

Fig. 5 shows a third embodiment of a system 1 for grouping and handling flexible articles 2 comprising two (or more) industrial robots 12, wherein to each industrial robot 12 a magazine 10 is attached.

In the embodiment shown on Fig. 5, a feeding device 4 is arranged at the inlet position, which facilitates filling a magazine 10 with several articles 2, in particular in case the articles are not rigid and potentially interfere with each other during filling the magazine 10. The feeding device 4 transports the flexible articles 2 conveyed on their flat sides in a horizontal plane from a production line (not shown) to a limit in particular at a bottom of the magazine 10. After each inserted flexible article 2, the industrial robot 12 moves the magazine 10 downwards in a vertical direction by a defined distance, in particular a distance that equals a thickness of the flexible article 2 received to create space for a subsequent flexible article to be inserted into the magazine.

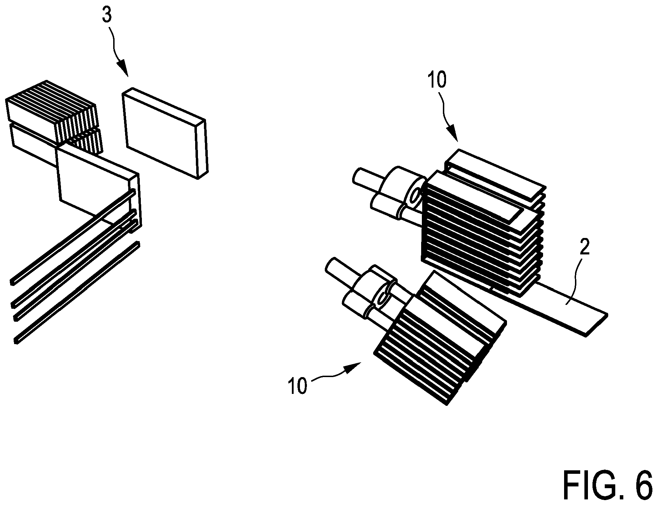

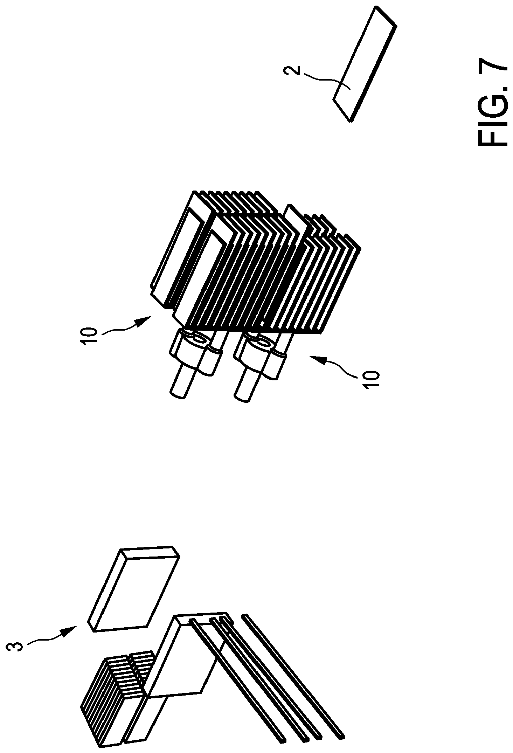

Fig. 6 and 7 shown a fourth embodiment of a system 1 for grouping and handling flexible articles 2 comprising two magazines 10, wherein each magazine is adapted to accommodate two adjacent stacks of articles 2. Depending on the embodiment, the two (or more) magazines 10 are alternately filled. In embodiments, after filling a first stack to a first magazine 10, the first magazine is removed from the inlet position and the second magazine 10 is moved to the inlet position for receiving flexible articles 2. In this case, while filling the second magazine 10, an orientation of the first magazine 10 is altered, such that after filling a first stack of articles to the second magazine 10, the first magazine 10 can be re-positioned in the inlet position for receiving flexible articles forming a second stack. It will be understood that the described process sequence is only by way of example and various modifications are conceivable.

While the present invention has been described with reference to exemplary embodiments, it will be readily apparent to those skilled in the art that the invention is not limited to the disclosed or illustrated embodiments but, on the contrary, is intended to cover numerous other modifications that are included within the scope of the claims.

## Claims

1. System for grouping and handling flexible articles (2), wherein the flexible articles (2) are serially conveyed along a conveyor path (20) to the system (1), the system (1) comprising a magazine (10), the magazine (10) having two opposing side walls (104) that define a space therebetween, wherein the magazine (10) is configured to receive a number of flexible articles (2) in the space between the side walls (104), **characterized in that** the system (1) further comprises an industrial robot (12), wherein the magazine (10) is attached to or gripped by the industrial robot (12), and wherein the industrial robot (12) is adapted
- for arranging the magazine (10) in an inlet position at an extension of the conveyor path (20),
- for moving the magazine (10) arranged in the inlet position such that the number of flexible articles (2) are sequentially received in the magazine (10), and
- for transferring the magazine (10) with the number of flexible articles to an outlet position.

2. The system according to claim 1, **characterized in that** the side walls (104) are moveable towards each other for compressing the flexible articles (2) received in the space therebetween, wherein in particular a force element, more particular, a spring element (106), is provided for forcing the side walls (104) towards each other and/or spreading the side walls (104) apart.

3. The system according to claim 1 or 2, **characterized in that** the space of the magazine (10) is subdivided into a plurality of compartments (100), wherein in particular each compartment (100) is adapted for receiving at least one flexible article.

4. The system according to claim 1, 2 or 3, **characterized in that** the industrial robot (12) is adapted for rotating the magazine (10) arranged at the inlet position about an axis parallel to leading edges of the flexible articles (2) conveyed along the conveyor path (20), such that the number of flexible articles (2) are sequentially received in the magazine (10), in particular for rotating the magazine (12) about a horizontal axis (16), such that the number of flexible articles (2) conveyed on their flat sides along a horizontal plane are sequentially received in the magazine (10).

5. The system according to any one of claims 1 to 4, **characterized in that** the industrial robot (12) is adapted for shifting the magazine (10) arranged at the inlet position in a direction transverse to the conveyor path (20), such that the number of flexible articles (2) serially conveyed along the conveyor path (20) are sequentially received in the magazine (10).

6. The system according to any one of claims 1 to 5, **characterized in that** the magazine (10) is adapted for receiving two or more adjacent stacks, wherein in each case the flat sides of flexible articles in one stack are arranged in parallel.

7. The system according to any one of claims 1 to 6, **characterized in that** two or more magazines (10) are provided, which in turns are arrangeable in the inlet position by means of the manipulator such that in each magazine (10) a number of flexible articles (2) are sequentially received.

8. The system according to any one of claims 1 to 7, **characterized in that** the system (1) further comprises a feeder device (16) arranged at the inlet position, which feeder device (16) is adapted for feeding the flexible articles (2) from the conveyor path (20) into the magazine (10).

9. Method for grouping and handling flexible articles (2) serially conveyed along a conveyor path (20), wherein a magazine (10) is arranged in an inlet position at an extension of the conveyor path (20), the magazine (10) having two opposing side walls (104) that define a space therebetween, wherein the magazine is configured to receive a number of flexible articles (2) in the space between the side walls (104), **characterized in that** an industrial robot (12) to which the magazine (10) is attached or which grips the magazine (10) arranges the magazine (10) in the inlet position, moves the magazine (10) arranged in the inlet position such that the number of flexible articles (2) is sequentially received in the magazine (10), and transfers the magazine (10) with the number of flexible articles to an outlet position.

10. The method according to claim 9, **characterized in that** the industrial robot (12) rotates the magazine (10) arranged at the inlet position about an axis parallel to leading edges of the flexible articles (2) conveyed along the conveyor path (20), such that the number of flexible articles (2) are sequentially received in the magazine, in particular the industrial robot rotates the magazine about a horizontal axis, such that the number of flexible articles conveyed on their flat sides along a horizontal plane is sequentially received in the magazine.

11. The method according to claim 9 or 10, **characterized in that** the industrial robot shifts the magazine arranged at the inlet position in a direction transverse to the conveyor path (20), such that the number of flexible articles (2) serially conveyed along the conveyor path (20) are sequentially received in the magazine (10).

12. The method according to any one of claims 9 to 11, **characterized in that** the manipulator (12) displaces the magazine (10) arranged at the inlet position for receiving two or more adjacent stacks, wherein in each case the flat sides of flexible articles in one stack are arranged in parallel.

13. The method according to any one of claims 9 to 12, **characterized in that** two or more magazines are in turns arranged in the inlet position for receiving each a number of flexible articles.

14. The method according to any one of claims 9 to 13, **characterized in that** the flexible articles are fed from the conveyor path (20) into the magazine (10) using a feeder device (16) arranged at the inlet position.

15. Use of an industrial robot for grouping and handling flexible articles serially conveyed along a conveyor path (20), wherein a magazine is attached to or gripped by the industrial robot, the magazine (10) having two opposing side walls (104) that define a space therebetween, wherein the magazine is configured to receive a number of flexible articles (2) in the space between the side walls (104), wherein the industrial robot (12) arranges the magazine (10) in an inlet position at an extension of the conveyor path (20), moves the magazine (10) arranged in the inlet position such that the number of flexible articles (2) is sequentially received in the magazine (10), and transfers the magazine (10) with the number of flexible articles to an outlet position.
